# FASCICULE DE BREVET EUROPEEN

(11) **EP 1 322 534 B1**
(45) Date de publication et mention de la délivrance du brevet: **26.05.2004**
(21) Numéro de dépôt: 01978509.6
(22) Date de dépôt: 01.10.2001
(51) Int. Cl.: B65G 47/32

(54) **PROCEDE ET DISPOSITIF POUR REGULER L'ESPACEMENT ET LA VITESSE D'OBJETS CHEMINANT DE FACON ALEATOIRE**
VERFAHREN UND VORRICHTUNG ZUR REGELUNG VON ABSTAND UND GESCHWINDIGKEIT VON ZUFALLSVERTEILT GEFÜHRTEN OBJEKTEN
METHOD AND DEVICE FOR REGULATING SPACING AND SPEED OF OBJECTS TRAVELLING RANDOMLY

(30) Priorité: 02.10.2000 FR 0012504
(43) Date de publication de la demande: 02.07.2003
(73) Titulaire: COMPAGNIE GENERALE DES MATIERES NUCLEAIRES, 78140 Velizy Villacoublay (FR)
(72) Inventeur: MAINGONNAT, René, F-30130 SAINT PAULET DE CAISSON (FR); LE BIANNIC, André, F-84400 GARGAS (FR); NEGRIER, Gérard, F-04860 PIERREVERT (FR); BRULARD, Daniel, F-30400 VILLENEUVE LEZ AVIGNON (FR); IMBERT, Eric, Lotissement La Comtoise, F-13013 MARSEILLE (FR)
(74) Mandataire: Poulin, Gérard
(86) Numéro de dépôt international: PCT/FR2001/003025
(87) Numéro de publication internationale: WO 2002/028752

(56) Documents cités:
- EP-A- 0 663 356
- US-A- 3 899 069

## Description

### Domaine technique

L'invention concerne un procédé conçu pour réguler l'espacement et la vitesse d'objets cheminant initialement en continu, l'un derrière l'autre et de façon aléatoire, selon une trajectoire donnée.

L'invention concerne également un dispositif mettant en oeuvre ce procédé.

Le procédé et le dispositif selon l'invention peuvent notamment être utilisés dans tous les cas où l'on désire pouvoir effectuer des opérations de contrôle, de traitement ou de tri sur des pièces unitaires ou sur des assemblages de pièces qui défilent en continu, selon un flux aléatoire. En effet, la régulation du trafic assurée grâce à l'invention permet alors d'identifier les pièces ou les assemblages de pièces, par exemple par marquage, comptage, pesage, etc..

Une application privilégiée de l'invention concerne la régulation du trafic des pastilles de combustible nucléaire en cours de fabrication, afin d'effectuer un tri dimensionnel desdites pastilles en dynamique, par lecture laser.

### Etat de la technique

Lors de la fabrication des pastilles de combustible nucléaire utilisées dans les assemblages combustibles destinés aux réacteurs nucléaires, les pastilles sont rectifiées selon un dimensionnement précis. Cette opération de rectification est suivie d'un tri dimensionnel, qui est effectué en dynamique, par lecture laser.

Pour que la lecture laser et le tri soient réalisés dans des conditions optimales, la vitesse de déplacement des pastilles et leur espacement doivent être constants. Cela impose de transformer le cheminement initial continu, mais aléatoire, des pastilles en un cheminement régulier, tant en espacement qu'en vitesse.

Actuellement, cette fonction est réalisée par un rail vibrant. Ce dispositif connu présente toutefois un certain nombre d'inconvénients qu'il est souhaitable de supprimer.

Ainsi, le réglage d'un rail vibrant est très délicat à réaliser et sujet à dérive dans le temps.

En outre, un tel dispositif ne permet pas de s'affranchir des frottements, qui fluctuent avec les différents types de pastilles fabriquées.

### Objet de l'invention

L'invention a précisément pour objet un procédé conçu pour réguler l'espacement dans le temps et dans l'espace d'objets tels que des pastilles de combustible nucléaire, cheminant initialement en continu, mais de façon aléatoire, sans nécessiter un réglage complexe et sujet à dérive, et tout en s'affranchissant des phénomènes de frottement.

Conformément à l'invention, ce résultat est obtenu au moyen d'un procédé pour réguler l'espacement et la vitesse d'objets cheminant initialement en continu, l'un derrière l'autre et de façon aléatoire, selon une première trajectoire donnée, ledit procédé étant caractérisé en ce qu'il comprend les étapes suivantes :
- on détecte l'arrivée d'au moins un premier des objets contre une butée placée dans le prolongement de la première trajectoire ;
- on déclenche de façon cyclique un déplacement dudit premier objet latéralement par rapport à la première trajectoire, après avoir détecté l'arrivée dudit premier objet contre la butée, de façon à l'amener entre deux éléments séparateurs consécutifs appartenant à des moyens d'entraînement des objets selon une deuxième trajectoire ;
- on actionne les moyens d'entraînement pour déplacer le premier objet selon la deuxième trajectoire sur une distance égale à l'écartement entre les éléments séparateurs consécutifs ; et
- on répète les étapes précédentes pour chacun des objets.

L'utilisation conjointe d'une butée, de préférence fixe, de moyens d'entraînement munis d'éléments séparateurs régulièrement espacés, et de moyens pour amener entre deux éléments séparateurs consécutifs un objet qui se trouve en appui contre la butée, permet de réguler l'espacement entre les objets, ainsi que leur vitesse de défilement, sans effectuer aucun réglage. Il n'y a donc pas de problème de dérive du réglage dans le temps. En outre, cet agencement permet de s'affranchir des phénomènes de fluctuation du frottement selon le type de pastilles fabriqué.

Dans un mode de réalisation préféré de l'invention, on déplace le premier objet latéralement en faisant tourner un organe à rotation cyclique tel qu'une came ou un barillet autour d'un axe sensiblement parallèle à la première trajectoire.

Par ailleurs, on déplace avantageusement le premier objet latéralement de façon à l'amener sur une glissière à section en forme de V, orientée selon la deuxième trajectoire.

De préférence, la deuxième trajectoire est sensiblement parallèle à la première trajectoire.

Avantageusement, on utilise des moyens d'entraînement qui comprennent une courroie sans fin munie de doigts ou de picots régulièrement espacés, formant les éléments séparateurs.

Selon un aspect intéressant de l'invention, on actionne les moyens d'entraînement dès qu'on a amené le premier objet entre deux éléments séparateurs consécutifs. A cet effet, on utilise un moteur unique associé à des moyens d'indexage pour commander ces deux mouvements.

L'invention a aussi pour objet un dispositif pour la mise en oeuvre du procédé précité.

Plus précisément, l'invention concerne également un dispositif pour réguler l'espacement et la vitesse d'objets cheminant initialement en continu, l'un derrière l'autre et de façon aléatoire, sur un moyen transporteur définissant une première trajectoire donnée, ledit dispositif étant caractérisé en ce qu'il comprend une butée placée dans le prolongement de la première trajectoire, des moyens de détection pour détecter l'arrivée d'au moins un premier des objets en appui contre ladite butée, des moyens d'entraînement munis d'éléments séparateurs régulièrement espacés les uns des autres et aptes à entraîner lesdits objets selon une deuxième trajectoire, des moyens de déplacement aptes à déplacer ledit premier objet de façon cyclique, latéralement par rapport à la première trajectoire, en réponse à un signal délivré par les moyens de détection, pour l'amener entre deux éléments séparateurs consécutifs, et des moyens pour commander une avance des moyens d'entraînement sur une distance égale à l'écartement entre deux éléments séparateurs, après chaque mise en oeuvre des moyens de déplacement.

### Brève description des dessins

On décrira à présent, à titre d'exemple non limitatif, un mode de réalisation préféré de l'invention, en se référant aux dessins annexés, dans lesquels :
- la figure 1 est une vue en perspective qui représente schématiquement un dispositif de régulation d'espacement conforme à l'invention ;
- la figure 2 est une vue de dessus du dispositif de la figure 1 ;
- la figure 3 est une vue de côté du dispositif de la figure 1 ; et
- la figure 4 est une vue en bout selon la flèche IV sur la figure 3.

### Description détaillée d'un mode de réalisation préféré de l'invention

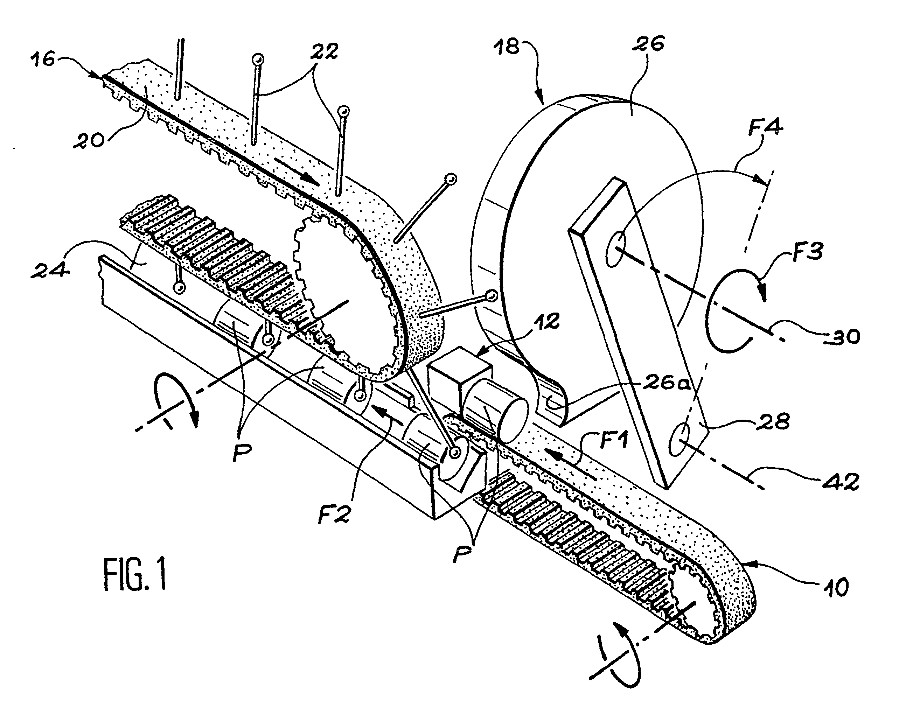

La figure 1 illustre schématiquement un dispositif de régulation d'espacement et de vitesse conforme à l'invention. De façon plus précise, le dispositif représenté est appliqué à la régulation de l'espacement et de la vitesse de pastilles P de combustible nucléaire. Dans ce cas, cette régulation est destinée à permettre d'effectuer en aval un tri dimensionnel des pastilles en continu, par lecture laser, dans des conditions optimales. Comme on l'a déjà indiqué, le dispositif selon l'invention peut être utilisé pour réguler l'espacement et la vitesse de pièces ou d'assemblages de pièces de toute autre nature, sans sortir du cadre de l'invention.

Les pastilles P dont on désire réguler l'espacement et la vitesse arrivent l'une derrière l'autre, selon un cheminement continu mais de façon aléatoire, sur la face supérieure horizontale d'un moyen transporteur 10.

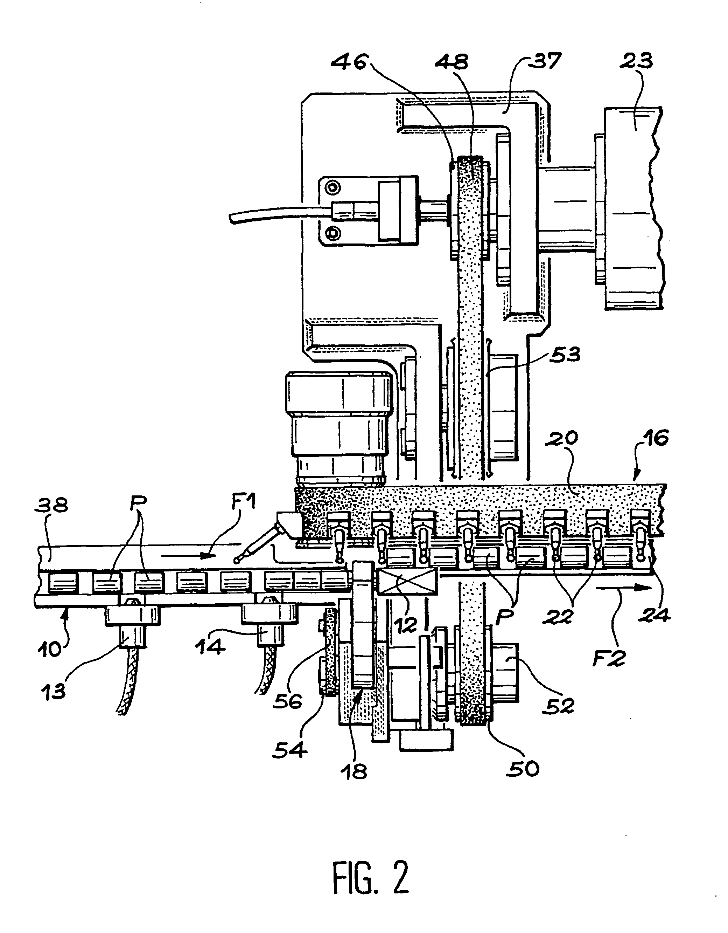

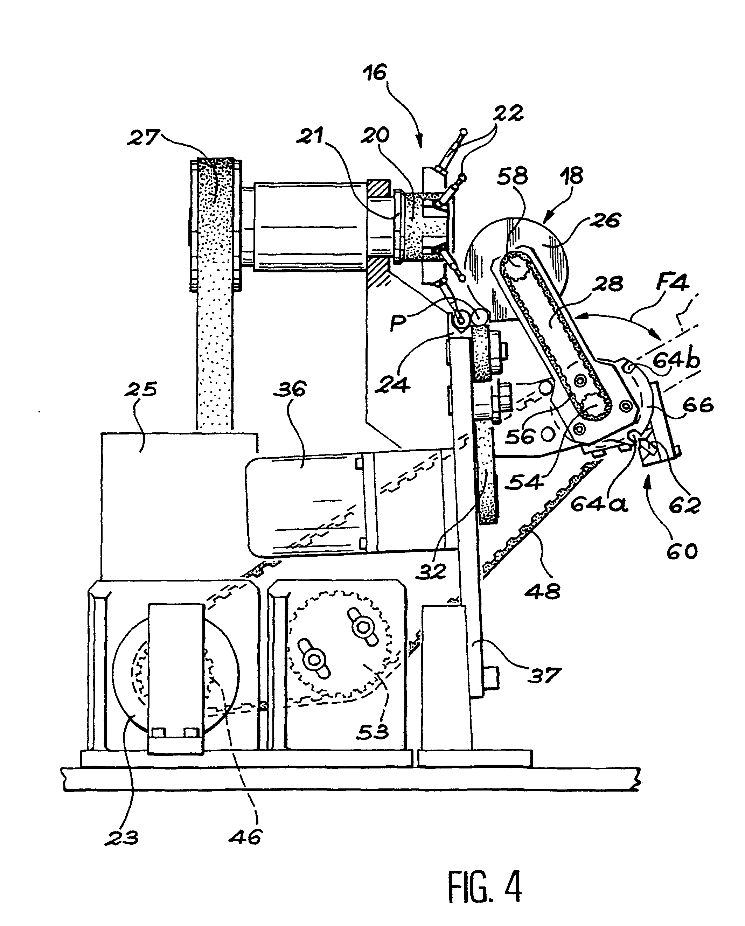

Plus précisément, comme l'illustrent en particulier les figures 2 à 4, le moyen transporteur 10 comprend une courroie crantée sans fin 32, montée sur des poulies crantées 34. L'une de ces poulies crantées est montée sur l'arbre de sortie d'un moto réducteur 36 (figure 4). Les poulies crantées 34 et le moto réducteur 36 sont supportés par un châssis 37. Le transporteur 10 comprend de plus des guides latéraux 38, placés de part et d'autre du brin supérieur horizontal de la courroie 32 et dont l'écartement est légèrement supérieur au diamètre des pastilles P.

Les pastilles P, de forme cylindrique, reposent sur le brin supérieur de la courroie 32, entre les guides 38, de façon telle que leur axe longitudinal soit orienté selon la direction de déplacement des moyens transporteurs 10. Cette direction, illustrée par la flèche F1 sur les figures 1 à 3, détermine la trajectoire de déplacement initial des pastilles P.

Le dispositif de régulation d'espacement et de vitesse selon l'invention comprend une butée mécanique 12 placée dans le prolongement de la trajectoire de déplacement initial des pastilles P, au-dessus de l'extrémité correspondante des moyens transporteurs 10. La butée mécanique 12 est fixe, supportée par le châssis 37 et placée dans le prolongement du brin supérieur de la courroie 32.

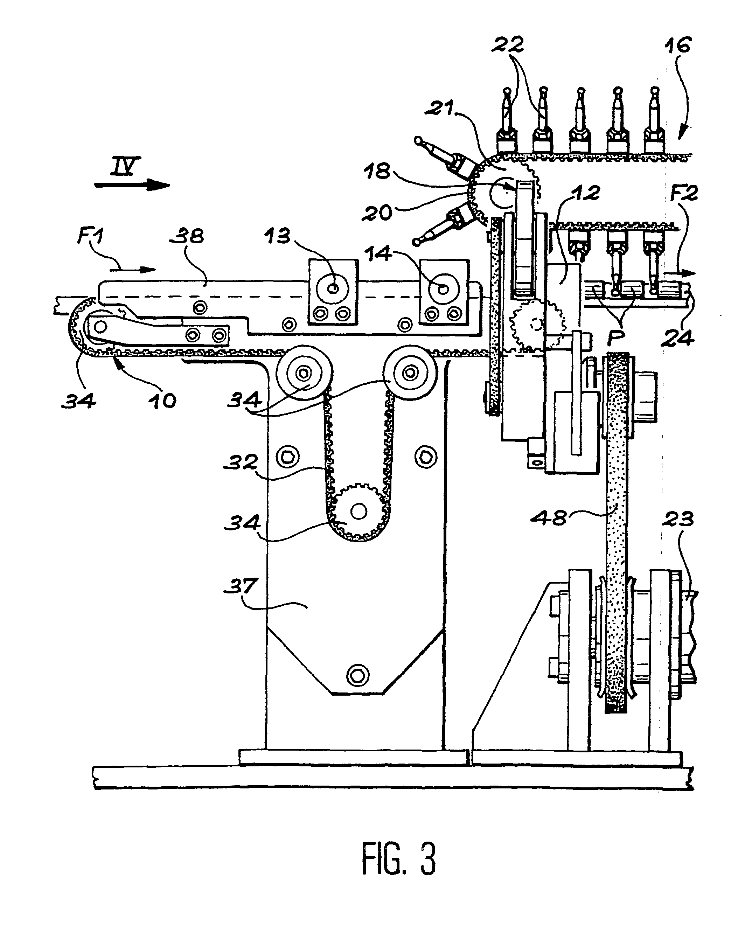

L'un des guides latéraux 38 porte deux capteurs de présence 13 et 14 (figures 2 et 3), décalés l'un par rapport à l'autre dans le sens du déplacement du brin supérieur de la courroie 32. Ces capteurs de présence 13 et 14 forment des moyens de détection. Chacun d'entre eux peut notamment être constitué par une cellule photoélectrique, un micro contact ou autre.

Les moyens de détection 13 les plus éloignés de la butée mécanique 12 sont conçus pour détecter un bourrage des pastilles P contre la butée 12, c'est-à-dire lorsque le nombre de pastilles en appui contre la butée dépasse une valeur prédéterminée. Cette valeur dépend de la distance qui sépare les moyens de détection 13 de la butée 12. Dans le mode de réalisation représenté à titre d'exemple sur les figures, cette valeur est égale à huit.

Les moyens de détection 14 les plus proches de la butée mécanique 12 sont conçus pour détecter la présence contre la butée d'un nombre minimal de pastilles. Ce nombre minimal est au moins égal à un. Dans le mode de réalisation illustré à titre d'exemple sur les figures, ce nombre minimal est égal à trois. De façon générale, la présence de ce nombre minimal de pastilles en appui contre la butée 12 conditionne la mise en oeuvre du dispositif selon l'invention, comme on le verra par la suite.

Lorsqu'une pastille P est présente devant les moyens de détection 13 et/ou 14, ces derniers émettent un signal électrique qui est transmis à une unité centrale de contrôle (non représentée). La permanence du signal émis par les moyens de détection 13 révèle l'existence d'un bourrage. La permanence du signal émis par les moyens de détection 14 autorise la mise en oeuvre des autres éléments du dispositif.

Le dispositif de régulation d'espacement et de vitesse selon l'invention comprend également des moyens d'entraînement 16, conçus pour entraîner une à une les pastilles P, avec un espacement constant, selon une deuxième trajectoire donnée, ainsi que des moyens de déplacement 18 permettant de déplacer l'une après l'autre chacune des pastilles de la première trajectoire à la deuxième trajectoire.

De façon plus précise, les moyens d'entraînement 16 comprennent une courroie crantée sans fin 20, munie d'éléments séparateurs 22 tels que des doigts ou des picots sur sa face extérieure. La courroie 20 est montée sur des poulies crantées 21 dont une seule apparaît sur les figures.

Comme l'illustre en particulier la figure 4, l'une des poulies crantées 21 est entraînée en rotation par l'arbre de sortie d'un moto réducteur 23.par l'intermédiaire d'un mécanisme d'indexage à pignons coniques 25 et d'une courroie crantée 27, en prise sur deux poulies crantées fixées respectivement sur l'arbre de sortie de l'indexeur et sur l'arbre portant la poulie crantée 21 assurant l'entraînement de la courroie 20. Le moto réducteur 23, l'indexeur 25 et les poulies crantées 21 sont portés par le châssis 37.

Une glissière 24 à section en forme de V est placée en dessous d'un brin inférieur horizontal de la courroie sans fin 20 et s'étend selon une direction sensiblement horizontale qui correspond à la deuxième trajectoire précitée. Plus précisément, la face supérieure, à section en forme de V, de la glissière 24 est située à un niveau tel que les pastilles P reposant sur cette face se trouvent sensiblement au même niveau que celles qui se trouvent sur les moyens transporteurs 10.

Dans le mode de réalisation représenté, la deuxième trajectoire est sensiblement parallèle à la première trajectoire définie par les moyens transporteurs 10 et décalée latéralement par rapport à ceux-ci, tout en étant située sensiblement dans le même plan horizontal.

Plus précisément, une partie terminale d'entrée de la glissière 24 est placée à côté d'une partie terminale de sortie des moyens transporteurs 10, adjacente à la butée 12. Les longueurs de ces parties terminales d'entrée et de sortie sont au moins égales à la longueur d'une pastille P susceptible de circuler dans le dispositif. Au-delà de sa partie terminale d'entrée, la glissière 24 s'étend parallèlement aux moyens transporteurs 10, en éloignement de ceux-ci.

La courroie sans fin 20 est placée au-dessus de la glissière 24, avec son brin inférieur horizontal orienté parallèlement à celle-ci, à une distance légèrement supérieure au diamètre des pastilles.

De façon plus précise, pour tenir compte de l'encombrement des moyens de déplacement 18, la courroie 20 est légèrement décalée latéralement à l'opposé du transporteur 10, par rapport à la glissière 24. Par ailleurs, les éléments séparateurs 22 sont orientés en oblique en direction de la glissière 24, de telle sorte que leurs extrémités soient placées juste au-dessus de celle-ci lorsque ces éléments sont dirigés vers le bas. Ainsi, chacun des éléments séparateurs 22 portés par le brin inférieur de la courroie 20 est en appui contre la face arrière d'une pastille P, lorsque la courroie sans fin 20 se déplace dans le sens correspondant à l'avance des pastilles. Ce sens de déplacement est illustré par des flèches F2 sur les figures 1 à 3.

La distance entre deux éléments séparateurs 22 est sensiblement supérieure à la longueur d'une pastille P, tout en étant inférieure à la longueur de deux pastilles. Par conséquent, seule une pastille P peut être reçue entre deux éléments séparateurs consécutifs.

Dans le mode de réalisation représenté sur les figures, les moyens de déplacement 18 comprennent un organe 26 à rotation cyclique, tel qu'une came ou un barillet, dont l'axe 30 est orienté parallèlement aux première et deuxième trajectoires illustrées par les flèches F1 et F2 sur les figures.

L'organe 26 à rotation cyclique est monté à une extrémité d'un bras 28, dont l'extrémité opposée est supportée par le châssis 37 de façon à pouvoir pivoter autour d'un axe horizontal 42, parallèle à l'axe 30.

L'organe 26 se présente sous la forme d'un disque de petit diamètre et d'épaisseur inférieure à la longueur d'une pastille P. Le bord périphérique de ce disque comporte une dent unique 27 qui présente un flanc avant de petit rayon de courbure, comparable à celui des pastilles P, et un flanc arrière sensiblement tangent au bord périphérique du disque.

Comme l'illustrent les figures, dans la position de fonctionnement occupée normalement par le bras 28, l'organe 26 est placé au-dessus du brin supérieur du transporteur 10, en face de la partie terminale de sortie de celui-ci. Plus précisément, il est décalé latéralement à l'opposé de la courroie 20 par rapport au transporteur 10.

Lorsque le disque 26 est entraîné en rotation autour de son axe 30, dans le sens correspondant à la flèche F3 sur la figure 1, le flanc avant de la dent 27 vient en appui contre une pastille P immobilisée sur le transporteur 10 par la butée 12, de façon à déplacer cette pastille latéralement sur la glissière 24. La pastille ainsi déplacée se trouve alors située entre deux éléments séparateurs 22 consécutifs des moyens d'entraînement 16.

Comme l'illustrent plus précisément les figures 2 à 4, l'organe 26 à rotation cyclique est entraîné en rotation par le moto réducteur 23, au travers d'un mécanisme à courroies. De façon plus précise, l'arbre de sortie du moto réducteur 23 entraîne une poulie crantée 46 en prise sur une courroie crantée sans fin 48. La courroie crantée 48 est également en prise sur une poulie crantée 50, solidaire d'un arbre 52 centré sur l'axe de pivotement 42 du bras 28. De façon usuelle, une poulie crantée 53 de réglage de tension peut également être en prise sur la courroie crantée 48.

Une deuxième poulie crantée 54 est également fixée sur l'arbre 52. Une courroie crantée sans fin 56 est en prise à la fois sur la poulie crantée 54 et sur une poulie crantée 58. La poulie crantée 58 est elle-même centrée sur l'axe de rotation 30 de l'organe 26 à rotation cyclique et solidaire d'un arbre par lequel cet organe est monté sur le bras 28.

L'agencement qui vient d'être décrit permet de commander, de façon cyclique, une rotation d'un tour de l'organe 26 autour de son axe 30, lors d'une mise en oeuvre du moto réducteur 23. Etant donné que le moto réducteur 23 entraîne également la courroie 20, comme on l'a décrit précédemment, chaque rotation d'un tour de l'organe 26 dans le sens de la flèche F3 s'accompagne d'une avance d'un pas de la courroie 20 dans le sens de la flèche F2. Cette avance d'un pas de la courroie 20 se traduit en pratique par un déplacement de celle-ci sur une distance égale à l'écartement entre deux éléments séparateurs 22 consécutifs. La présence de l'indexeur 25 dans la liaison mécanique entre le moto réducteur 23 et la courroie 20 a pour effet de commencer le déplacement de la courroie 20 immédiatement après qu'une pastille P a été poussée entre deux éléments séparateurs 22 consécutifs de cette courroie.

A titre d'exemple illustratif et nullement limitatif de l'invention, dans le cas de pastilles P de 13mm de long acheminées par les moyens transporteurs 10 à 40mm/s, un défilement régulier des pastilles sur la glissière 24 à la cadence de 1,5 pastilles/s en commandant une rotation de 360° de l'arbre de sortie du moto réducteur 23 en 0,666s. Pendant une première partie de cette rotation, de durée égale, par exemple, à 0,055s, la pastille initialement en appui contre la butée 12 est poussée latéralement sur la glissière 24 par l'organe 26. Dès la fin de cette première période et pendant une période de durée égale, par exemple, à 0,444s, la bande 20 avance, par exemple, de 20mm.

Un mécanisme d'indexage, désigné de façon générale par la référence 60 sur la figure 4, permet de maintenir normalement le bras 28 dans la position de fonctionnement illustré sur les figures. Ce mécanisme d'indexage comprend un doigt escamotable 62, monté sur le châssis 37, ainsi que deux trous 64a et 64b, formés sur un flasque 66 centré sur l'axe 42 et solidaire du bras 28

Lorsque le doigt 62 est placé dans le trou 64a, le bras 28 occupe sa position de fonctionnement dans laquelle une rotation de l'organe 26 a pour effet de pousser une pastille P du transporteur 10 sur la glissière 24. Lorsque le doigt 62 est sorti du trou 64a, le bras 28 peut pivoter autour de l'axe 42,de façon à amener le trou 64b en face du doigt. Un organe élastique (non représenté), tel qu'un ressort de rappel, pousse alors le doigt 62 dans ce trou 64b de façon à maintenir le bras 28 dans cette position, dite «d'intervention », dans laquelle l'organe 26 n'est plus placé au-dessus du transporteur 10. Le basculement du bras 28 entre les positions de fonctionnement et d'intervention est illustré schématiquement par des flèches F4 sur les figures 1 et 4. Ce basculement, ainsi que l'actionnement des moyens d'indexage 60 peuvent être commandés manuellement, comme représenté, ou à l'aide de moyens de commande à distance, sans sortir du cadre de l'invention.

La position d'intervention du bras 28 peut notamment être utilisée lorsqu'un incident tel qu'un blocage des pastilles P contre la butée 12 se produit.

Lorsque l'installation est active, le bras 28 occupe sa position de fonctionnement. Les pastilles P sont alors acheminées l'une derrière l'autre par les moyens transporteurs 10, selon un flux aléatoire, notamment en ce qui concerne leur espacement. La présence d'un nombre prédéterminé de pastilles P en appui contre la butée 12 est immédiatement détectée par les moyens de détection 14. Ces derniers émettent alors un signal de détection qui est transmis instantanément à l'unité centrale (non représentée). Dès la réception de ce signal, l'unité centrale commande une rotation d'un tour complet de l'organe 26 à rotation cyclique. Cette rotation de l'organe 26 a pour effet de pousser latéralement sur la glissière 24 la pastille P qui était en appui contre la butée 12. Plus précisément, la pastille P précitée est alors introduite entre deux éléments séparateurs 22 consécutifs des moyens d'entraînement 16. Les pastilles P sont ainsi insérées, une à une, entre les éléments séparateurs 22 successifs portés par la courroie crantée 20, qui se déplace pas à pas, après chaque arrivée d'une pastille sur la glissière 24, sous l'action du moto réducteur 23.

Comme on l'a déjà noté, le bras 28 peut être basculé en position d'intervention, par exemple dans le cas d'un blocage accidentel du dispositif.

Le dispositif qui vient d'être décrit permet de garantir un défilement des pastilles P à espacement constant, sur la glissière 24. On peut donc procéder, en aval, à toute opération de contrôle, de traitement ou de tri des pastilles, par exemple par lecture laser. Du fait que le défilement des pastilles à écartement constant dans le temps et dans l'espace ne nécessite aucun réglage, les inconvénients de l'art antérieur liés à l'utilisation d'un rail vibrant sont supprimés.

Bien entendu, l'invention n'est pas limitée au mode de réalisation qui vient d'être décrit à titre d'exemple. Ainsi, l'organe tournant 26 peut notamment être remplacé par un organe coulissant de type poussoir effectuant un mouvement de va et vient selon une direction sensiblement perpendiculaire à la trajectoire suivie par les objets sur le premier transporteur. Par ailleurs, la trajectoire suivie par le transporteur 20 n'est pas nécessairement parallèle à celle du premier transporteur. En outre, comme on l'a déjà indiqué, les objets transportés peuvent être de différentes natures, sans sortir du cadre de l'invention.

## Revendications

1. Procédé pour réguler l'espacement et la vitesse d'objets (P) cheminant initialement en continu, l'un derrière l'autre et de façon aléatoire, selon une première trajectoire donnée, ledit procédé étant **caractérisé en ce qu'**il comprend les étapes suivantes :
- on détecte l'arrivée d'au mois un premier des objets (P) contre une butée (12) placée dans le prolongement de la première trajectoire ;
- on déclenche de façon cyclique un déplacement dudit premier objet latéralement par rapport à la première trajectoire, après avoir détecté l'arrivée dudit premier objet contre la butée, de façon à l'amener entre deux éléments séparateurs (22) consécutifs appartenant à des moyens d'entraînement (16) des objets (P) selon une deuxième trajectoire ;
- on actionne les moyens d'entraînement (16) pour déplacer le premier objet selon la deuxième trajectoire sur une distance égale à l'écartement entre les éléments séparateurs (22) consécutifs ; et
- on répète les étapes précédentes pour chacun des objets.

2. Procédé selon la revendication 1, dans lequel on déplace le premier objet latéralement en faisant tourner un organe à rotation cyclique (26) autour d'un axe (30) sensiblement perpendiculaire à la première trajectoire.

3. Procédé selon l'une quelconque des revendications précédentes, dans lequel on déplace le premier objet latéralement de façon à l'amener sur une glissière (22) à section en forme de V, orientée selon la deuxième trajectoire.

4. Procédé selon l'une quelconque des revendications précédentes, dans lequel la deuxième trajectoire est sensiblement parallèle à la première trajectoire.

5. Procédé selon l'une quelconque des revendications précédentes, dans lequel on utilise des moyens d'entraînement (16) comprenant une courroie sans fin (20) munie de doigts régulièrement espacés formant lesdits éléments séparateurs (22).

6. Procédé selon l'une quelconque des revendications précédentes, dans lequel on actionne les moyens d'entraînement (16) dès qu'on a amené le premier objet entre deux éléments séparateurs (22) consécutifs.

7. Procédé selon l'une quelconque des revendications précédentes, dans lequel on utilise une butée (12) fixe.

8. Dispositif pour réguler l'espacement et la vitesse d'objets (P) cheminant initialement en continu, l'un derrière l'autre et de façon aléatoire, sur un premier moyen transporteur (10) définissant une première trajectoire donnée, ledit dispositif étant **caractérisé en ce qu'**il comprend une butée (12) placée dans le prolongement de la première trajectoire, des moyens de détection (14) pour détecter l'arrivée d'au moins un premier des objets (P) en appui contre ladite butée (12), des moyens d'entraînement (16) munis d'éléments séparateurs (22) régulièrement espacés les uns des autres et aptes à entraîner lesdits objets (P) selon une deuxième trajectoire, des moyens de déplacement (18) aptes à déplacer ledit premier objet, de façon cyclique, latéralement par rapport à la première trajectoire, en réponse à un signal délivré par les moyens de détection (14), pour l'amener entre deux éléments séparateurs (22) consécutifs, et des moyens (23,25) pour commander une avance des moyens d'entraînement (16) sur une distance égale à l'écartement entre deux éléments séparateurs (22) consécutifs, après chaque mise en oeuvre des moyens de déplacement (18).

9. Dispositif selon la revendication 8, dans lequel les moyens de déplacement (18) comprennent un organe (26) à rotation cyclique apte à tourner autour d'un axe (30) sensiblement parallèle à la première trajectoire.

10. Dispositif selon l'une quelconque des revendications 8 et 9, comprenant de plus une glissière (24) à section en forme de V, orientée selon la deuxième trajectoire de façon à recevoir le premier objet lorsqu'il est déplacé latéralement par les moyens de déplacement (18).

11. Dispositif selon l'une quelconque des revendications 8 à 10, dans lequel la deuxième trajectoire est sensiblement parallèle à la première trajectoire.

12. Dispositif selon l'une quelconque des revendications 8 à 11, dans lequel les moyens d'entraînement (16) comprennent une courroie sans fin (20) munie de doigts régulièrement espacés formant lesdits éléments séparateurs (22).

13. Dispositif selon l'une quelconque des revendications 8 à 12, dans lequel les moyens de déplacement (18) et les moyens d'entraînement (16) comprennent des moyens de motorisation uniques (23), les moyens pour commander une avance des moyens d'entraînement comportant des moyens d'indexage (25).

14. Dispositif selon l'une quelconque des revendications 8 à 13, dans lequel la butée (12) est fixe.

## Patentansprüche

1. Verfahren zum Einstellen des Abstands und der. Geschwindigkeit von Objekten (P), die sich anfänglich kontinuierlich hintereinander und auf zufällige Art auf einer gegebenen ersten Laufbahn fortbewegen, wobei das Verfahren **dadurch gekennzeichnet ist, dass** es die folgenden Schritte umfasst:
- Erfassen der Ankunft mindestens eines ersten der Objekte (P) an einem in der Verlängerung der ersten Laufbahn angeordneten Anschlag (12),
- zyklisches Auslösen einer Lateralverschiebung des ersten Objekts in Bezug auf die erste Laufbahn, nachdem die Ankunft des ersten Objekts am Anschlag erfasst worden ist, so dass es zwischen zwei aufeinanderfolgende Trennelemente (22) geführt wird, die zu Antriebsmitteln (16) der Objekte (P) auf einer zweiten Laufbahn gehören,
- Betätigen der Antriebsmittel (16), um das erste Objekt auf der zweiten Laufbahn über eine der Beabstandung zwischen den aufeinanderfolgenden Trennelementen (22) gleiche Strecke zu verschieben, und
- Wiederholen der vorangehenden Schritte für jedes der Objekte.

2. Verfahren nach Anspruch 1, wobei das erste Objekt lateral verschoben wird, indem ein Element (26) mit zyklischer Drehung um eine zur ersten Laufbahn im wesentlichen senkrechte Achse (30) gedreht wird.

3. Verfahren nach einem der vorangehenden Ansprüche, wobei das erste Objekt lateral so verschoben wird, dass es auf eine Gleitbahn (22) mit V-förmigem Querschnitt, die gemäß der zweiten Laufbahn ausgerichtet ist, geführt wird.

4. Verfahren nach einem der vorangehenden Ansprüche, wobei die zweite Laufbahn im wesentlichen parallel zur ersten Laufbahn ist.

5. Verfahren nach einem der vorangehenden Ansprüche, wobei Antriebsmittel (16), die einen Endlosriemen (20) umfassen, der mit regelmäßig beabstandeten Fingern, welche die Trennelemente (22) bilden, versehen ist, verwendet werden.

6. Verfahren nach einem der vorangehenden Ansprüche, wobei die Antriebsmittel (16) betätigt werden, sobald das erste Objekt zwischen die beiden aufeinanderfolgenden Trennelemente (22) geführt worden ist.

7. Verfahren nach einem der vorangehenden Ansprüche, wobei ein feststehender Anschlag (12) verwendet wird.

8. Vorrichtung zum Einstellen des Abstands und der Geschwindigkeit von Objekten (P), die sich anfänglich kontinuierlich hintereinander und auf zufällige Art auf einem ersten Transportmittel (10) fortbewegen, das eine erste gegebene Laufbahn festlegt, wobei die Vorrichtung **dadurch gekennzeichnet ist, dass** sie einen in der Verlängerung der ersten Laufbahn angeordneten Anschlag (12), Erfassungsmittel (14) zum Erfassen der Ankunft mindestens eines ersten der Objekte (P) zur Anlage an dem Anschlag (12), Antriebsmittel (16), die mit regelmäßig voneinander beabstandeten Trennelementen (22) versehen sind, und die Objekte (P) auf einer zweiten Laufbahn antreiben können, Verschiebemittel (18), welche das erste Objekt zyklisch in Reaktion auf ein von den Erfassungsmitteln (14) geliefertes Signal in Bezug auf die erste Laufbahn lateral verschieben können, um es zwischen zwei aufeinanderfolgende Trennelemente (22) zu führen, sowie Mittel (23,25) zum Steuern einer Vorwärtsbewegung der Antriebsmittel (16) über eine der Beabstandung zwischen zwei aufeinanderfolgenden Trennelementen (22) gleiche Strecke nach jedem Einsatz der Verschiebemittel (18) umfasst.

9. Vorrichtung nach Anspruch (8), wobei die Verschiebemittel (18) ein zyklisches Drehorgan (26), das um eine zur ersten Laufbahn im wesentlichen parallele Achse (30) drehen kann, umfassen.

10. Vorrichtung nach einem der Ansprüche 8 oder 9, ferner mit einer Gleitbahn (24) mit V-förmigem Querschnitt, die auf einer zweiten Laufbahn so ausgerichtet ist, dass sie das erste Objekt aufnimmt, wenn dieses von den Verschiebemitteln (18) lateral verschoben wird.

11. Vorrichtung nach einem der Ansprüche 8 bis 10, wobei die zweite Laufbahn im wesentlichen parallel zur ersten Laufbahn ist.

12. Vorrichtung nach einem der Ansprüche 8 bis 11, wobei die Antriebsmittel (16) einen Endlosriemen (20), der mit regelmäßig beabstandeten, die Trennelemente (22) bildenden Fingern versehen ist, umfassen.

13. Vorrichtung nach einem der Ansprüche 8 bis 12, wobei die Verschiebemittel (18) und die Antriebsmittel (16) einheitliche Motor-Antriebsmittel (23) umfassen, und die Mittel zum Steuern einer Vorwärtsbewegung der Antriebsmittel Schrittschaltmittel (25) umfassen.

14. Vorrichtung nach einem der Ansprüche 8 bis 13, wobei der Anschlag (12) feststehend ist.

## Claims

1. Method to regulate the spacing and speed of objects (P) initially being conveyed continuously, in succession and in a random fashion along a first path, said method being **characterised in that** it comprises the following steps :
- the arrival of at least the first of the objects (P) against a stop (12) placed in the extension of the first path is detected ;
- a movement of said first object laterally with respect to the first path is triggered cyclically, after detecting the arrival of said first object against the stop, so as to convey it between two consecutive separating components (22) belonging to driving means (16) of the objects (P) along a second path ;
- the driving means (16) are actuated to move the first object along the second path over a distance equal to the distance between the consecutive separating components (22) ; and
- the above steps are repeated for each of the objects.

2. Method according to claim 1 wherein the first object is moved laterally by rotating a cyclic rotary device (30) around an axis (30) roughly parallel with the first path.

3. Method according to any of the above claims, wherein the first object is moved laterally so as to convey it onto a V-shaped cross-section sliding rail (22), oriented along the second path.

4. Method according to any of the above claims, wherein the second path is roughly parallel with the first path.

5. Method according to any of the above claims, wherein driving means (16) which comprise an endless belt (20) equipped with regularly spaced fingers, forming said separating components (22), are used.

6. Method according to any of the above claims, wherein the driving means (16) are actuated once the first object has been conveyed between two consecutive separating components (22).

7. Method according to any of the above claims, wherein a stationary stop (12) is used.

8. Device to regulate the spacing and speed of objects (P) initially being conveyed continuously, in succession and in a random fashion, on a first conveyance means (10) defining a first given path, said device being **characterised in that** it comprises a stop (12) placed in the extension of the first path, detection means (14) to detect the arrival of at least the first of the objects (P) resting against said stop (12), driving means (16) equipped with separating components (22) regularly spaced with respect to each other and capable of driving said objects (P) along a second path, movement means (18) capable of moving said first object in a cyclic fashion, laterally with respect to the first path, in response to a signal emitted by the detection means (14), to convey it between two consecutive separating components (22), and means (23,25) to control forward movement of the driving means (16) over a distance equal to the distance between two separating components (22), after each use of the movement means (18).

9. Device according to claim 8, wherein the movement means (18) comprise a cyclic rotary device (26), capable of rotating around an axis (30) roughly parallel with the first path.

10. Device according to any of claims 8 and 9, also comprising a V-shaped cross-section sliding rail (24), oriented along the second path so as to receive the first object when it is moved laterally by the movement means (18).

11. Device according to any of claims 8 to 10, wherein the second path is roughly parallel with the first path.

12. Device according to any of claims 8 to 11, wherein the driving means (16) comprise an endless belt (20) equipped with regularly spaced fingers forming said separating components (22).

13. Device according to any of claims 8 to 12, wherein the movement means (18) and the driving means (16) comprise single motorisation means (23), the means to control forward movement of the driving means comprising indexing means (25).

14. Device according to any of claims 8 to 13, wherein the stop (12) is stationary.
